# EUROPEAN PATENT APPLICATION

(11) **EP 2 717 570 A1**
(43) Date of publication of application: **09.04.2014**
(21) Application number: 11866488.7
(22) Date of filing: 02.06.2011
(51) Int. Cl.: H04N 7/18, B60R 1/00, B60R 21/00

(54) **DEVICE FOR MONITORING AREA AROUND WORKING MACHINE**

(71) Applicant: Hitachi Construction Machinery Co., Ltd., Bunkyo-ku Tokyo 112-0004 (JP)
(72) Inventor: ISHIMOTO, Hidefumi, Tsuchiura-shi Ibaraki 300-0013 (JP)
(74) Representative: MERH-IP Matias Erny Reichl Hoffmann
(86) International application number: PCT/JP2011/062661
(87) International publication number: WO 2012/164712

(57) **Abstract**

An around view monitor system for monitoring surroundings of the working machine includes a plurality of cameras arranged on the upper swiveling unit, each two of which are arranged such that view field ranges thereof partially overlap with each other; an image transformation device to convert camera images of respective cameras to viewpoint transformation such that upper viewpoint images; an image composing device for addressing to respective display areas; and a display image pattern converting device for changing boundary positions between the display areas for the respective virtual viewpoint images.

## Description

### Technical Field

The present invention relates to an aroundviewmonitor device for a working machine such as a hydraulic excavator to ensure safety or the like during operating the machine.

### Background Art

A hydraulic excavator as an example of working machines is an automotive working machine and has a lower travelling unit having a crawler-type or wheel-type travelling means. An upper swiveling unit is mounted on the lower travelling unit via a swing mechanism. A working means for performing works such as digging earth and sand is attached to the upper swiveling unit, and the working means is provided with a boom connected tiltably up and down to the upper swiveling unit and an arm connected pivotally in an up-and-down direction at a distal end of the boom. A bucket, which serves to perform work such as digging or the like of earth and sand, is connected as an attachment to a distal end of the arm through a link mechanism. These boom, arm and bucket are consisting of a multi-joint structure.

In automotive working machines such as hydraulic excavators, providing around monitoring systems are known to confirm periphery around the upper swiveling units in order to ensure safety for work and to improve operability. Such an around view monitor system is constructed by mounting cameras on a upper swiveling unit and arranging a monitor in an operator's cab at a position forward of an operator' s seat in which an operator is seated. Images captured by the cameras are displayed on the monitor as a screen image in the form of moving picture.

Cameras are fixedly held on the upper swiveling unit so that its view field range is limited. For the assurance of traveling safety and the like, it is essentially necessary to assure fields of vision at rear and both left and right sides of the upper swiveling unit, nevertheless to say with a field of vision at a forward position where a working subject is located. To obtain a field of vision over as wide a range as possible around the working machine, it has been a conventional practice to use a construction that plural cameras are mounted on the upper swiveling unit. This construction can eliminate blind spots over the substantially entire periphery of the upper swiveling unit, thereby making improvements in the assurance of work safety and the operability of the working machine.

Images of the surroundings of the working machine captured by the plural cameras, that is, camera images cannot be displayed all together on the monitor in general, but any one or ones of the camera images are selectively displayed upon demands. This selection of the camera image or images for its or their display on the monitor relies upon an operation by an operator. For displaying desired one or ones of the images from the respective cameras, it is common to adopt a construction that the monitor is additionally provided with a change-over switch, a remote control device or the like and the operator manually operates the change-over switch to display the desired image or images.

Because of the arrangement of the plural cameras, however, it may be required to select by the change-over switch one by one until the desired image or images are displayed so that the operator should spend much time for the image change-over operation. Moreover, it is necessary to change over the monitor during the operation of the working machine. This image change-over operation, therefore, involves much difficulties in operability.

One that has obviated, with the foregoing in view, the need for a change-over operation for every camera image by setting camera images to sequentially change is disclosed in Patent Document 1. This Patent Document 1 displays not only all the camera images sequentially but also enables skip setting that changes the change-over procedure or does not display one or some of the camera images.

In this connection, it may be hardly to know a precise distance simply by a camera image. Around of the working machine should be secured for safety upon operation of the upper swiveling unit to confirm whether or not any worker or obstacle exists near the working machine, but it may not be possible to accurately determine only from camera images whether or not the upper swiveling unit would come into contact with such a worker or other obstacle. Upon backward movement of the travelling unit, it may also be impossible to confirm how close the working machine has come to the worker, obstacle or the like. During swiveling action or backward movement of the working machine, a moving object or the like such as a worker or vehicle or a structural object or any other fixed object becomes obstacles to the operation. It is necessary to avoid a collision against a moving or fixed obstacle. The use of the camera images as a sole means for the around view can be confirmed the shape and size of such a moving or fixed obstacle, but cannot recognize the accurate distance from the working machine.

When an image is obtained by a camera with a field of vision thereof directed in an obliquely downward direction from a predetermined height is subjected to processing for coordinate transformation, the camera image can be transformed to an image as viewed from a virtual viewpoint, in other words, to a virtual viewpoint image. As such a virtual viewpoint image, an upper viewpoint image with a viewpoint placed at an upper position, for example, is displayed as an image in a bird's eye view. Display of this virtual viewpoint image on a monitor makes it possible to accurately grasp the distance to a moving or fixed obstacle. A system for performing monitoring around a working machine by displaying virtual viewpoint images is disclosed, for example, in Patent Document 2. In this Patent Document 2, cameras are mounted at predetermined positions on a rear and left side of a hydraulic excavator as a working machine, the optical axes of these cameras are directed obliquely downward to capture images having wide fields of vision at the rear and side of the hydraulic excavator, these images are subjected to viewpoint transformation to form bird's eye view images as viewed from an upper viewpoint, and the virtual viewpoint images are displayed as around monitoring images on a monitor.

By displaying the virtual viewpoint images in the manner as described above on the monitor, the distance from the upper swiveling unit to the moving or fixed obstacle can be accurately recognized. Upon backward movement or swiveling of the working machine, the safety surroundings thereof can, therefore, be confirmed based on this display on the monitor. In a case of a hydraulic excavator as the working machine, a working means for performing digging earth and sand or the like is provided on a right side of an operator's cab on the upper swiveling unit. The field of vision from the operator's eyes in the operator's cab is restricted by the working means, but a field of vision is needed also for this direction. Therefore, cameras should be arranged not only at a rear position of the upper swiveling unit but also on a right side of the upper swiveling unit in accordance with Patent Document 2.

### Prior Art Documents

### Patent Documents

Patent Document 1: JP-A-2008-114814
Patent Document 2: WO-A-2006/106685

### Disclosure of the Invention

### Problem to Be Solved by the Invention

Virtual viewpoint images from the upper viewpoint as the virtual viewpoint can be displayed on a plane view. Therefore, upon displaying the virtual viewpoint images on a monitor, an working machine image as created by converting the working machine itself on a plane view image or by graphically defining such a plane view image is displayed on the monitor at the central position, and the virtual viewpoint images are displayed around the image of the working machine. For monitoring the surroundings, it is necessary to show a rear field of vision and left and right fields of vision on the monitor, although it is optional to display a field of vision forward of the working machine because the forward field of vision is available to the operator's eyes. Therefore, the working machine is provided with cameras, one being at least one position on the rear part thereof, and two being at positions on both left and right sides thereof respectively, camera images captured by these cameras are subjected to coordinate transformation to form virtual viewpoint images, and these plural viewpoint images are compositely displayed on the monitor.

It is to be noted that boundary parts occur between display areas of the respective virtual viewpoint images as the plural virtual viewpoint images are displayed on the monitor. When the virtual viewpoint image acquired from the rear view camera and the virtual viewpoint image acquired from one of the side view cameras are displayed in a composite form, for example, a boundary part exists between the two display areas. These cameras are different from each other in position and view field direction. To be concretely, the rear view camera and either side view cameras are apart from each other by approximately 90 degrees in optical axis so that, when the rear virtual viewpoint image and the side virtual viewpoint images are displayed in compositely on the monitor, they are not constituted as a continuous images but the boundary part occurs between two images.

If an image of a potential moving or fixed obstacle exists at a boundary position between the rear view camera and one of the side view cameras which are different from each other in position and view field direction, a concerned target image may be existed at the image at the boundary portion and this concerned target image is acquired by both of the two cameras. When the concerned target image is displayed as a virtual viewpoint image on the monitor, the concerned target image may not be displayed as a whole but may be displayed as a separated image such that a part of the target image may appear on the rear virtual viewpoint image and its remaining part may appear on the side virtual viewpoint image. As a consequence, the concerned target image may be displayed with a partially missing, or may be displayed in part on one of the virtual viewpoint images and may not be displayed at all on the other virtual viewpoint image. When the operator watches the monitor, he or she may not be able to determine whether the image displayed at the boundary part is a moving obstacle or a fixed obstacle, further may overlook the moving or fixed obstacle itself.

With the foregoing in view, an object of the present invention is to permit displaying an image at the position in a boundary part between virtual viewpoint images displayed compositely on a monitor so as to be visually confirmed, and hence to enable more reliable and accurate monitoring of surroundings of a working machine.

### Means for Solving the Problem

According to the present invention, in order to achieve the above-mentioned object, there is provided an around view monitor system for a working machine having a lower traveling unit and an upper swiveling unit being adapted to make swiveling movement thereon, wherein a working mechanism is attached to at a proximal position of an operator's seat provided on the upper swiveling unit which comprises: a plurality of cameras provided on the upper swiveling unit to be placed adjacent cameras partially overlapped area of view fields with each other; an image transformation device to transform viewpoints of respective camera images to virtual view points of upper viewpoint images; an image composing device to display the respective virtual viewpoint images captured by the respective cameras on a monitor to be addressed on respective display areas of a monitor; and a display image pattern converting device to change the position of boundary between the adjacent display areas of the respective virtual viewpoint images.

In a case where virtual viewpoint images are created by subjecting camera images which have been captured by the plural cameras arranged on the upper swiveling unit, their viewpoints are transformed to upper viewpoint images having respective height of a concerned target image of a potential moving or fixed obstacle in proportion with angle of the optical axis to the virtual plane. The individual cameras are different in position and direction at the corresponding positions on the upper swiveling unit. When the virtual viewpoint images are createdbased on camera images captured by these plural cameras and are compositely displayed on the monitor, the concerned target image is shown in its entirety if it is obtained from only one of the cameras. On the other hand, when the concerned target image is obtained from two of the cameras, and the corresponding virtual viewpoint images to be overlapped each other, the position and direction of the concerned target image may be different in the composite virtual viewpoint images.

Since the virtual viewpoint images acquired from the two cameras on the upper swiveling unit such that they overlap each other in position and view field ranges are limited in the display area on the monitor, the mutually overlapped images is shown one of the virtual images or shared partly the two mages and the remaining image portion is not shown. As a result, when the boundary portion is placed at the position of the concerned target, the concerned target image is partially separated from each other or lost the image partially. However, the concerned image is captured entirely or at the degree to be recognized at least one virtual viewpoint image by shifting the boundary portion to display the concerned target image at a level to be understood depending upon the direction to shift of the boundary portion.

Concerning the upper swiveling unit of the working machine, a forward field of vision can be obtained through the eyes of the operator of the workingmachine, but a rearward field of vision behind the upper swiveling unit is not available from the operator's seat. Further, fields of vision on the left and right sides are visually available in parts, but include some areas which are not directly visible when the operator is facing forward in the operator' s seat. It is, therefore, desired to arrange one or more cameras at a position or positions on the rear part of the upper swiveling unit and also one ormore cameras at a position or positions on each of the left and right side parts of the upper swiveling unit.

The monitor may be arranged at a position proximal to the operator's seat on the upper swiveling unit, where the operator can easily watch the monitor. As a display on the monitor, a plane view of the working machine image or a working machine icon graphically defined from the plane view image is centrally displayed. Around the working machine icon, the respective virtual viewpoint images based on the camera images captured by the respective cameras may be compositely displayed.

When the cameras are each arranged on the rear part and left and right side parts of the upper swiveling unit, a composite image on the monitor consists of a rear virtual viewpoint image, a left virtual viewpoint image, and a right virtual viewpoint image has boundary parts at the positions between the rear virtual viewpoint image and the left virtual viewpoint image and between the rear virtual viewpoint image and the right virtual viewpoint image, respectively. As a display pattern on the monitor, one of each two overlapped portions in respective virtual viewpoint images may not be displayed in either of the virtual viewpoint images, preferably with each boundary part being placed substantially at a center portion, and this display pattern will be called "the standard image display". The display image pattern converting means may be configured to be shifted from this standard image display to an expanded rear image display that the rear virtual viewpoint image is shown expanded or, the side image display that one or both of the left virtual viewpoint image and right virtual viewpoint image is expanded.

The display image pattern converting means for changing to the standard image display, to expand rear image display or to expand side image display may be manually operated by the operator. For this purpose, the display image pattern converting means may be provided with a display change-over means. The display image pattern converting means may be configured as a touch panel. With a view to ensuring the reliability and accuracy of operations, however, it is desired to provide the monitor with an image display part and plural switches that make up an input part as the display change-over means.

The display change-over means may be configured to permit not only changing over by the above-mentioned manual operation but also automatic change-over, and may be provided, as change-over modes, with a manual change-over mode and an automatic change-over mode. It is to be noted that in the automatic change-over mode, the change-over of the display may be performed according to a change in circumstances of the working machine. First, the display change-over means can be set such that the display is automatically changed over according to the operating conditions of the working machine. Upon backward movement of the working machine, for example, the display shown the composite image may be changed to the expanded rear image display. Upon swiveling of the upper swiveling unit, the composite image may be changed to the expanded either side image display. In the automatic change-over mode, on the other hand, when a moving obstacle to the working machine may detected, further the display image pattern converting means is activated to shift the relevant display boundary positions automatically according to the position of the moving obstacle. In particular, it is desired to detect the position of a worker as a personal obstacle and to enable the change-over of the display following to the movement of the worker. For this purpose, it is possible, for example, to detect movements in camera images and/or to perform image recognition of a helmet or the like. It is also possible to take a measure such as making each worker carry an electric or magnetic transmitter.

### Advantageous Effects of the Invention

An image of a potential moving or fixed obstacle can be displayed, as one capable of being confirmed by watching, at a position in a boundary part between two of plural virtual viewpoint images displayed as a composite camera image captured from plural cameras arranged on a upper swiveling unit of a working machine, thereby making it possible to more reliably and accurately perform the monitoring of surroundings of the working machine.

### Brief Description of the Drawings

FIG. 1 is a front view of a hydraulic excavator as an example of a working machine.
FIG. 2 is a plan view of FIG. 1.
FIG. 3 is an explanatory configuration diagram of a monitor, which shows as a first embodiment of the present invention,
FIG. 4 is a circuit configuration diagram of an image processing system,
FIG. 5 is an explanatory diagram on areas, where virtual viewpoint images are shown, of an image display part of the monitor,
FIG. 6 is an explanatory diagram showing a standard image display pattern A on the monitor of FIG. 3.
FIG. 7 is an explanatory diagram showing a display pattern B for an expanded rear image on the monitor of FIG. 3.
FIG. 8 is an explanatory diagram showing a display pattern C for expanded side images, which have been obtained by expanding a right virtual viewpoint image 22R and a left virtual viewpoint image 22L, on the monitor of FIG. 3.
FIG. 9 is a flow chart diagram showing a processing procedure in a manual change-over mode.
FIG. 10 is a flow chart diagram showing a processing procedure in an automatic change-over mode.
FIGS. 11A to 11D are explanatory diagrams showing changes in display pattern according to the swing condition of a upper swiveling unit during traveling of a lower travelling unit.
FIGS. 12A to 12C are explanatory diagrams showing changes in display pattern during movement of moving obstacles in the automatic change-over mode.

### Modes for Carrying out the Invention

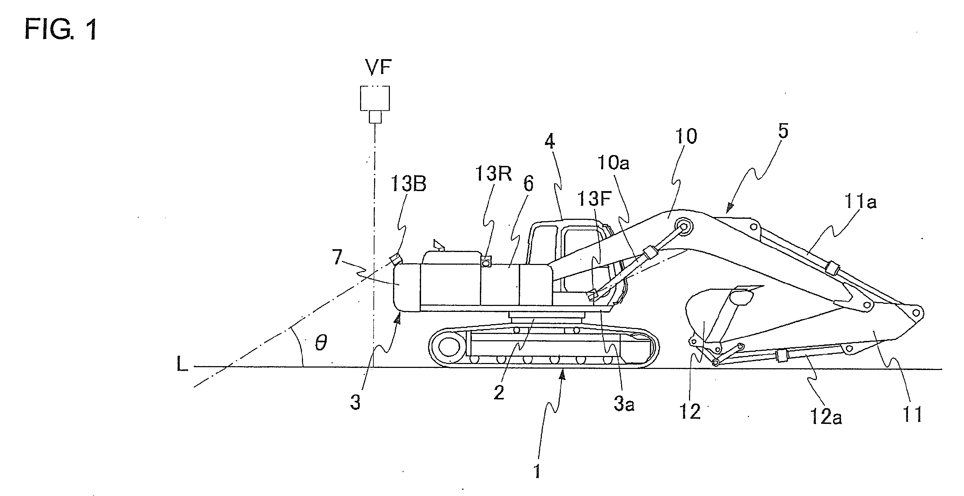

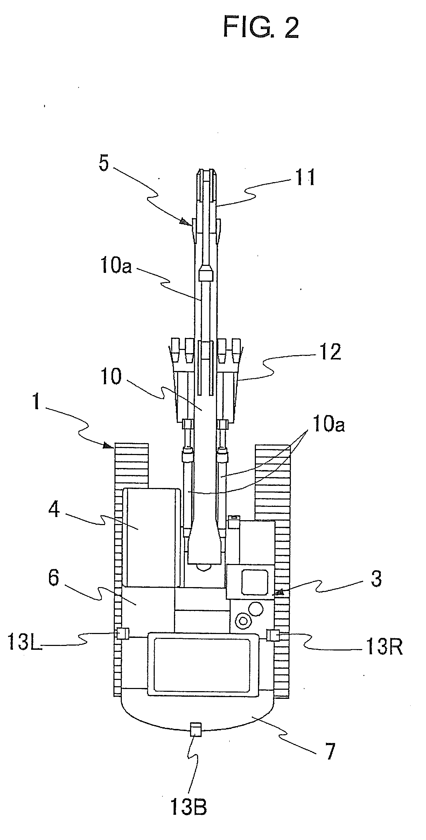

Hereinafter, a description will hereafter be made about an embodiment of the present invention in light of the drawings. First, the construction of a hydraulic excavator as an example of a working machine is shown in FIGS. 1 and 2. In these figures, numeral 1 designates a lower travelling unit having a crawler-type travelling means, and a upper swiveling unit 3 is mounted on the lower travelling unit 1 via a swivel mechanism 2.

Mounted on the upper swiveling unit 3 is an operator's cab 4, in which an operator sits to operate the machine. Further, a workingmeans 5 for performing work such as digging of earth and sand is attached to the upper swiveling unit 3. The working means 5 is arranged on the right side of the operator's cab 4 at a position such that the working means 5 extends substantially in parallel with the operator's cab 4. In addition, the upper swiveling unit 3 is provided, at a position behind the operator's cab 4 and working means 5, with an equipment housing 6, and is also provided at a distal end portion thereof with a counterweight 7.

In the embodiment shown in this figure, the working means 5 is an earth digging means constructed of a boom 10, an arm 11, and a bucket 12 as an attachment. The boom 10 is pivotally supported at a proximal end portion thereof on a frame 3a of the upper swiveling unit 3 via a connecting pin, and is hence tiltable. The arm 11 is connected pivotally in the up-and-down direction to a free end of the boom 10, and the bucket 12 is pivotally connected to a distal end of the arm 11. The tilting operation of the boom 10 is performed by driving boom cylinders 10a. The arm 11 is driven by an arm cylinder 11a, and the bucket 12 is driven by a bucket cylinder 12a.

In the hydraulic excavator of the above-mentioned construction, the operator who operates the hydraulic excavator performs operations while facing forward in the operator's cab 4, so that a sufficiently wide field of vision is kept forward of the upper swiveling unit 3. An obliquely forward field of vision is also kept on the left side of the operator's cab 4. Even on the left side, the operator, however, cannot directly see obliquely rearward unless he or she turns backwardly. On the right side of the operator' s cab 4, the working means 5 is arranged, so that a substantial part of a field of vision is blocked by the boom 10 and visual confirmation may not be practically available. On the rear part of the upper swiveling unit 3, the equipment housing 6 and counterweight 7 are located, so that the operator cannot obtain a field of vision unless he or she turns round in the operator' s cab 4. Moreover, the top walls of the equipment housing 6 and counterweight 7 are each located at a high position. Therefore, even if the operator takes a backward posture in the operator's cab 4, it is at a far position that a field of vision is available, and a position near the upper swiveling unit 3 is not visible.

For the foregoing reasons, to enable the monitoring of the rear and left and right sides of the upper swiveling unit, monitor cameras 13B,13L, 13R are arranged to complementary keep fields of vision, respectively. Described specifically, the rear view camera 13B is arranged on the top wall of the counterweight 7 at a substantially laterally-centered position thereof. Further, the left view camera 13L is arranged on the top wall of the equipment housing 6 at a left position thereof, and the right view camera 13R is also arranged on the top wall of the equipment housing 6 or a tank at a position on a right side of the upper swiveling unit 3. By the rear view camera 13B, an image of a wide range rearward of the upper swiveling unit 3 can be captured. By this rear view camera 13B and the left and right view cameras 13L, 13R, a field of vision substantially over the entire periphery except for a forward field of vision, which is available to the operator in a comfortable posture, is obtained in the operator's cab 4 on the upper swiveling unit 3.

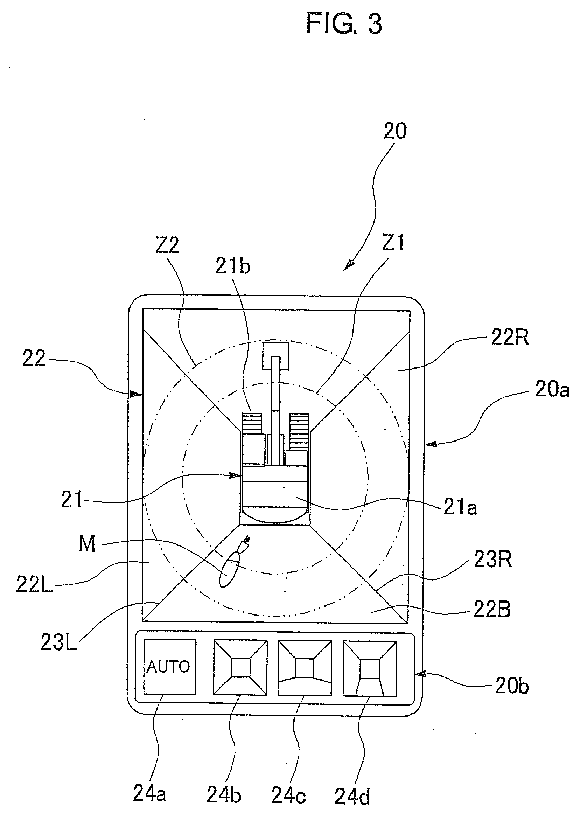

The viewing angles of the lenses of the respective cameras 13B, 13L, 13R and their arrangement positions are, therefore, set such that at least parts of the view field ranges of the respective lenses overlap each other. Described specifically, they are set such that the viewing angle of the rear view camera 13 overlaps at both left and right side parts thereof with those of the left and right view cameras 13L, 13R, respectively. By those cameras setting so, blind spot cannot be entirely removed anywhere around the upper swiveling unit 3. In addition, a monitor 20 is arranged in the operator's cab 4 as shown in FIG. 3, and images obtained from these individual cameras 13B, 13R, 13L are displayed in the form of moving pictures on the monitor 20. However, the camera images captured by these individual cameras 13B, 13R, 13L are not displayed as they are, but are subjected to viewpoint transformation to form images as viewed from an upper viewpoint and are displayed as virtual viewpoint images.

Now, taking the rear view camera 13B as an example, the rear view camera 13B has an object lens, the optical axis of which is directed obliquely downward at an angle θ relative to the rear of the upper swiveling unit 3 as shown in FIG. 1. Designating a ground surface, with which the lower travelling unit 1 of the hydraulic excavator is in contact, by letter L, a camera image having the angle θ relative to this ground surface L is obtained at this time. A coordinate-transformed virtual viewpoint image is created such that an optical axis from a virtual viewpoint VF extends at right angles relative to the ground surface L as a virtual plane. As a consequence, the camera image captured at the angle θ from the obliquely upward viewpoint is transformed to a virtual viewpoint image, in other words, a bird's eye view image, and is displayed on the monitor 20. Similar to the rear view camera 13B, the inclinations of the optical axes of the left and right view cameras 13L, 13R relative to the ground surface L are set at the angle θ. The rear view camera 13B is directed toward the rear of the upper swiveling unit 3, while the left and right view cameras 13L, 13R are directed to sideward directions. Thedirection of the rear view camera 13B and the directions of the left view camera 13L and right view camera 13R, all relative to the ground surface L as the virtual plane, are hence different by approximately 90 degrees.

The monitor 20 shown in FIG. 3 consists of an image display part 20a and an input part 20b. An image is displayed on the image display part 20a, and the input part 20b is provided with switches. On the image display part 20a, a working machine icon 21 graphically defined from a plane image of the hydraulic excavator is displayed at a central position thereof. The working machine icon 21 is composed of an upper structure portion 21a and a lower travelling unit portion 21b. Displayed around this working machine icon 21 is a virtual standpoint image 22 created by performing viewpointtransformation based on the camera images captured by the cameras 13B, 13R, 13L. The virtual standpoint image 22 is composed of a rear virtual viewpoint image 22B as a virtual viewpoint image based on the camera image from the camera 13B and a right viewpoint camera image 22R and left viewpoint camera image 22L as virtual viewpoint images based on the camera images from the cameras 13R, 13L, respectively. Between the rear virtual viewpoint image 22B and the right viewpoint camera image 22R, a boundary line 23R is located as a boundary position between the corresponding display areas, and between the rear virtual viewpoint image 22B and the left virtual viewpoint camera image 22L, a boundary line 23L is located.

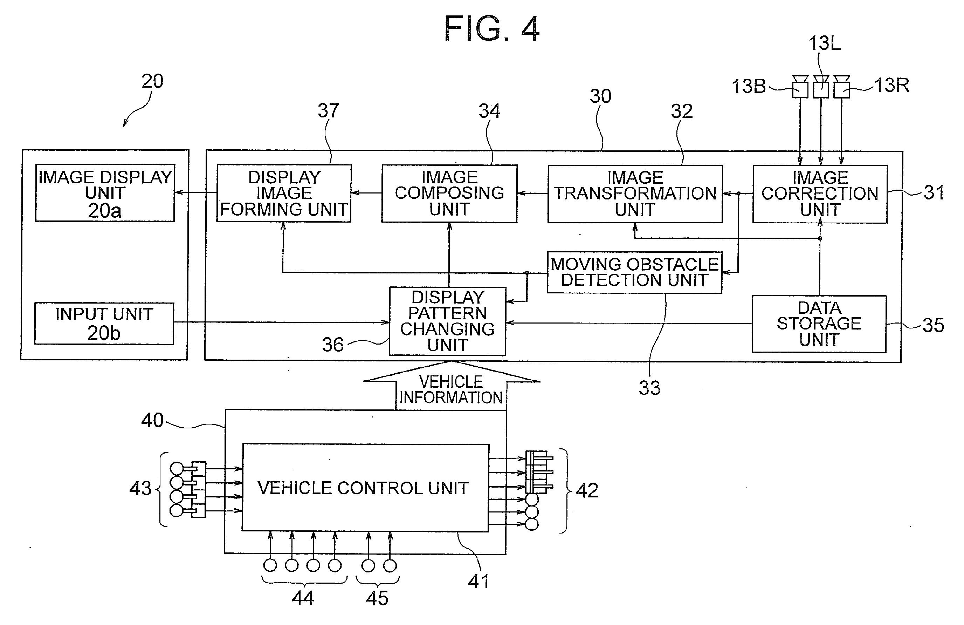

As has been described above, on the image display part 20a of the monitor 20, the workingmachine icon 21 is displayed, and at the three areas around the working machine icon 21, the virtual viewpoint images 22B, 22R, 22L are displayed, so that the monitoring of the surroundings of the hydraulic excavator is feasible. For this purpose, a monitoring controller 30 is arranged. About the configuration of this monitoring controller 30, a description will be made based on FIG. 4.

In this figure, the camera images captured by the cameras 13B, 13R, 13L are inputted in an image correction unit 31. At this image correction unit 31, the inputted camera images are subjected to image corrections, such as aberration correction, contrast correction and color correction, based on the parameters of camera optical systems, whereby the captured images are improved in its quality.

An image transformation unit 32 and moving obstacle detection unit 33 are connected to and arranged in parallel to each other on an output side of the image correction unit 31. At the image transformation unit 32, each camera image is subjected to viewpoint transformation such that an upper viewpoint image is created. As a result, the virtual viewpoint image 22 composed of the rear virtual viewpoint image 22B, right virtual viewpoint image 22R and left virtual viewpoint image 22L on the rear and right and left sides is created at the image transformation unit 32. The virtual viewpoint image 22 in these three directions is to be displayed on the image display part 20a of the monitor 20, but the display areas for the respective virtual viewpoint images 22B, 22R, 22L have been set on the image display part 20a. Accordingly, the monitoring controller 30 is provided with an image composing unit 34, the virtual viewpoint images 22B, 22R, 22L outputted from the image transformation unit 32 are allocated to the corresponding display areas by the image composing unit 34, and the boundary lines 23R, 23L that divide and define the display areas between the rear virtual viewpoint image 22B and the right virtual viewpoint image 22R and left virtual viewpoint images 22L are shown. It is to be noted that the boundary lines 23R, 23L are not fixed but their positions are changeable as will be mentioned subsequently herein.

The monitoring controller 30 is provided with a data storage unit 35, in which the various parameters of the camera optical systems are stored to perform image corrections on the camera images captured by the cameras 13B, 13R, 13L and inputted in the image correction unit 31. In this data storage unit 35, data on the workingmachine icon 21 composed of the upper structure portion 21a and lower travelling unit portion 21b are also stored. These data are inputted in the image composing unit 34 via a display image pattern converting unit 36. The data of display images are outputted to the monitor 20 via a display image creation unit 37, and a monitoring image such as that shown in FIG. 3 is displayed on the image display part 20a of the monitor 20.

In FIG. 3, an area where there is a potential danger of contact with a moving or fixed obstacle as an object to be avoided to avoid a collision is set as a dangerous zone Z1. As a range required for the assurance of safety, another circle of a predetermined radius is drawn on an outer side of the circle, and the area between these two circles is set as a warning zone Z2. Similar to the data on the working machine icon 21, these dangerous zone Z1 and warning zone Z2 are also stored in the data storage unit 35. In FIG. 3, a worker icon M is also shown as an example of a concerned target image as a potential moving or fixed obstacle in the display area of the rear virtual viewpoint image 22B. In the illustrated circumstances, this worker icon M is located in the dangerous zone Z1.

As has already been described, the parts on both the left and right sides in the field of vision from the rear camera 13B partially overlap the fields of vision from the left and right view cameras 13L, 13R. Upon displaying the virtual viewpoint image 22 on the image display part 20a of the monitor 20, a part of at least one of the rear virtual viewpoint image 22B, right virtual viewpoint image 22R ad left virtual viewpoint image 22L is not shown.

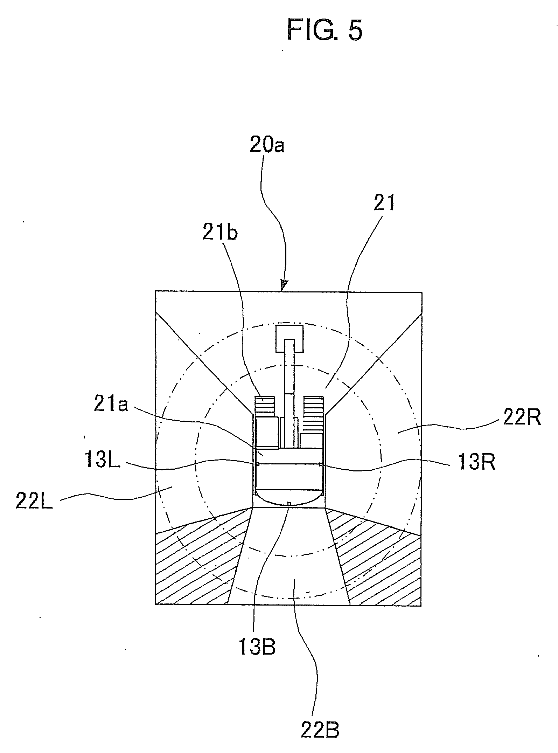

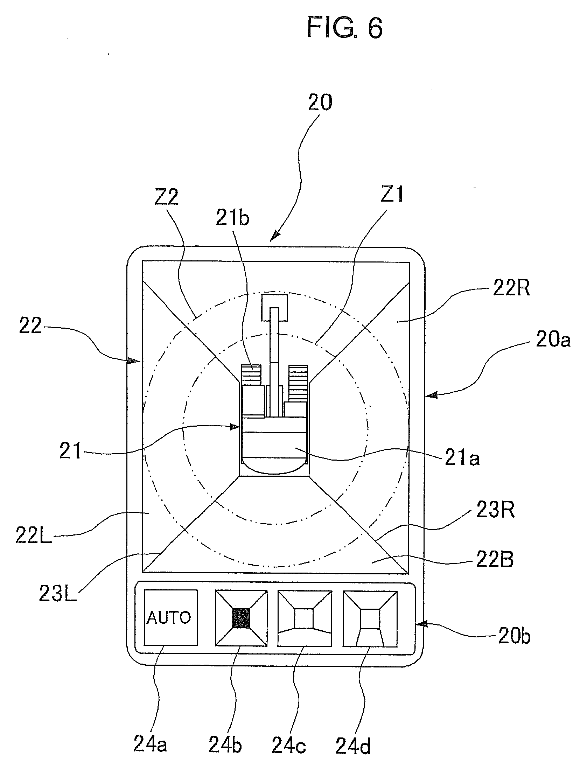

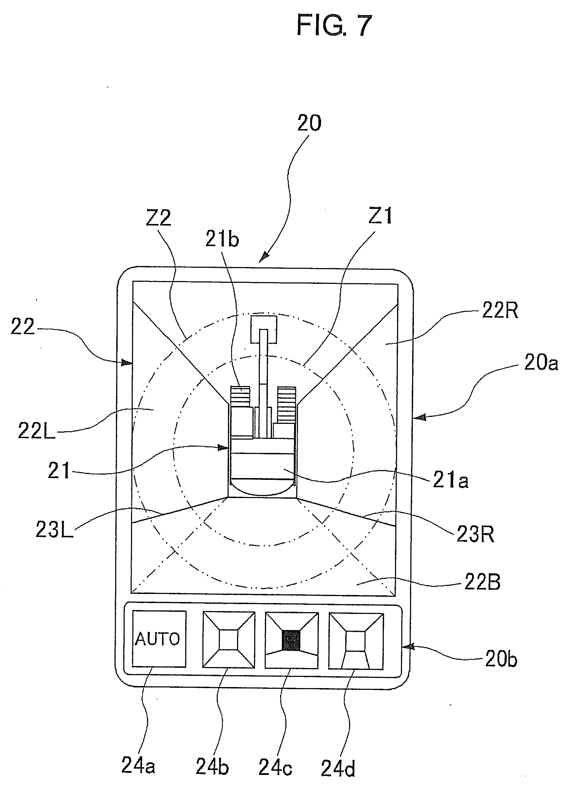

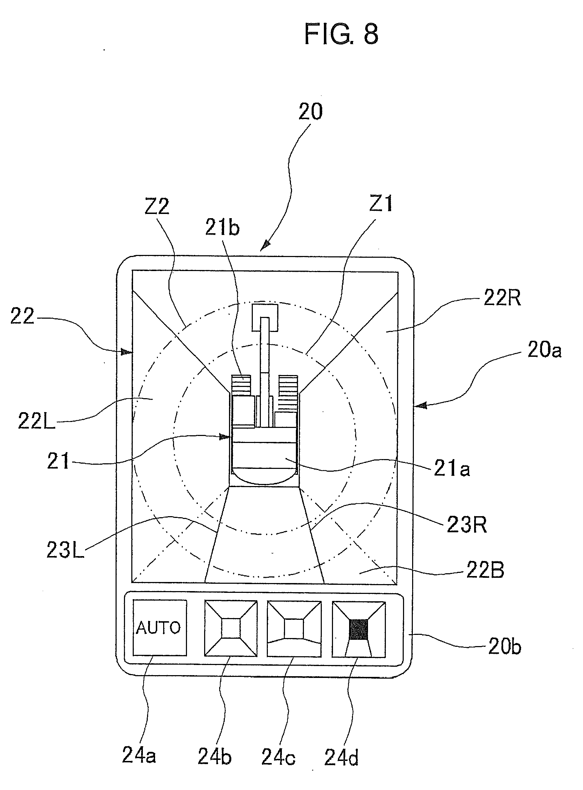

Described specifically, as shown in FIG. 5, the hatched parts in the virtual viewpoint image 22 obtained from the cameras 13B, 13L, 13R are overlapping parts, which can be displayed either by the rear virtual viewpoint image 22B or by the right virtual viewpoint image 22R and left virtual viewpoint image 22L. At each overlapping part, one of the relevant images is displayed accordingly. Depending on which image should be displayed to which extent, one of three kinds of display patterns can be selected. Of these patterns, one shown in FIG. 6 is a standard image display pattern A, one shown in FIG. 7 is a display pattern B for an expanded rear image that the rear virtual viewpoint image 22B is shown expanded, and one shown in FIG. 8 is a display pattern C for expanded side images that both of the right virtual viewpoint image 22R and left virtual viewpoint image 22L are expanded.

Meanwhile, the cameras 13B, 13L, 13R are different in arrangement position, and are also different in the direction of the optical axis. If a concerned target image is displayed at the position of the boundary line 23R or 23L between the rear virtual viewpoint image 22B and the right virtual viewpoint image 22R or left virtual viewpoint image 22L or at a position near the position of the boundary line and the concerned target image is displayed extending over two of the virtual viewpoint images, the positions of the concerned target image may be out of alignment in the two images or may be displayed with a portion thereof being missing in one image. In a case where a concerned target image is displayed on only one of the virtual viewpoint images, a determination can be easily performed as to whether or not this concerned target image is a moving obstacle. When the boundary lines 23R, 23L on the image display part 20a in the standard image display pattern B of FIG. 6 is displayed, the standard image display pattern changes to the display pattern B as shown in FIG. 7 to be expanded rear image that the rear virtual viewpoint image 22B is shown expanded, or changes to the display pattern C as shown in FIG.8 of the expanded side images.

To change the display pattern as described above that the monitor 20 is provided with the input part 20b. The input part 20b is provided with four change-over switches 24a, 24b, 24c, 24d. The switch 24a is to select an automatic change-over mode, while the switches 24b, 24c, 24d are used as manual change-over switches. When the display patterns are selected via the manual change-over switches 24b, 24c, 24d, respectively, the selected switches 24b-24d are lit at central portions thereof as indicated solid black in FIGS. 6 to 8.

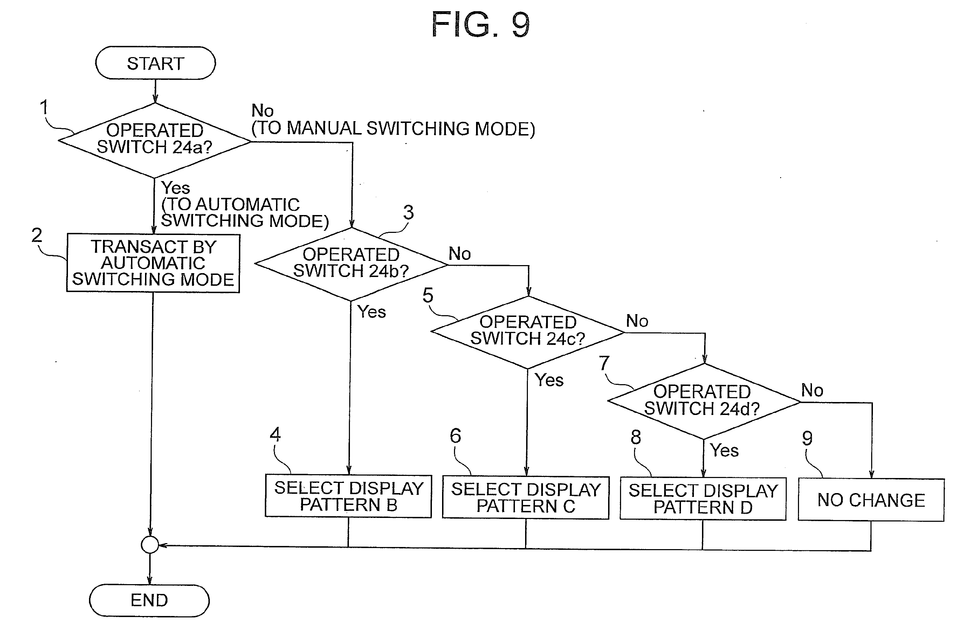

Now, the procedure of change-over processing of images is shown in FIG. 9. In this figure, a determination is made in step 1 as to whether or not the switch 24a has been operated. If the switch 24a has been operated, the image change-over is conducted with the automatic change-over mode as shown in step 2. If the automatic change-over mode is not selected, on the other hand, the switches 24b-24d arranged at the input part 20b of the monitor 20 are maintained in a manually switchable state.

Step 3 and further steps are processing in a manual change-over mode. In step 3, a determination is made as to whether or not the switch 24b has been operated. If the switch 24b has been operated, the display pattern B is displayed on the monitor 20 (step 4). If the switch 24c is determined in step 5 to have been operated, the display pattern B is displayed on the monitor 20 (step 6). If the switch 24d is determined in step 7 to have been operated, the display pattern C is displayed on the monitor 20 (step 8). If none of these switches are operated, on the other hand, no image is displayed on the monitor 20 or a currently-displayed image continues to be displayed as it is (step 9), and the monitor 20 remains in a standby state.

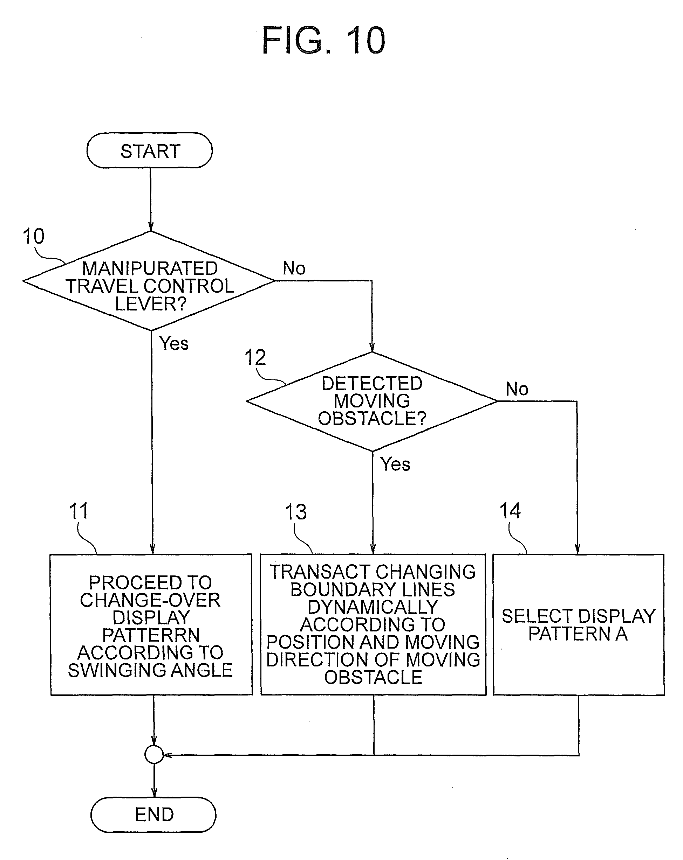

If the automatic change-over mode is determined in step 2 to have been selected, the processing procedure of FIG. 10 is started. In this embodiment, the processing in the automatic change-over mode is assumed to have been set such that necessary one or ones of the virtual viewpoint images is or are shown expanded during traveling by the lower travelling unit 1 or upon detection of a moving or fixed obstacle. It is, however, to be noted that the processing in the automatic change-over mode is not limited to these two patterns or is not necessarily required to include these two patterns.

To enable the processing in the automatic change-over mode, there is a need to detect an operation of the hydraulic excavator at the monitoring controller 30. As shown in FIG. 4, the monitoring controller 30 is configured to be able to acquire vehicle information from a vehicle controller 40. The vehicle controller 40 has a vehicle control unit 41.

The hydraulic excavator is provided with the hydraulic cylinders 10a-12a for the boom 10, arm 11 and bucket 12, and is also provided with a hydraulic motor for driving left and right travel means, which make up the lower travelling unit 1, and a swing motor for driving or swinging the upper swiveling unit 3. These hydraulic cylinders and hydraulic motors are collectively called "hydraulic actuators", and are shown as hydraulic actuators 42 in FIG. 4. To drive the hydraulic actuators 42, control levers 43 which consist of plural control levers are arranged inside the operator's cab 4. When the operator manipulates one or more of the control levers 43, this information is inputted for the vehicle control unit 41, and by instructions from the vehicle control unit 41, the corresponding one or ones of the hydraulic actuators that make up the hydraulic actuators 42 is or are driven. There are those which are configured to directly send an instruction or instructions from one or more of the control levers 43 to the corresponding one or ones of the hydraulic actuators 42 by one or more electrical signals. There are also those which are configured to convert one or more instructions to one or more hydraulic signals and to input only one or more signals relating to a stroke or strokes of the one or more control levers to the vehicle control unit 41.

Further, the vehicle control unit 41 is also configured to detect the relative angles of the boom 10, arm 11 and bucket 12 and the swing angle of the revolving upper structure 3 to the lower travelling unit 1. For this purpose, angle sensors are arranged at the positions on these elements, and these angle sensors are also shown collectively as angle sensors 44 in FIG. 4. Furthermore, a travel speed and a swivel action speed are also recognizable, and therefore, speed sensors 45 are also connected to the vehicle control unit 41.

As has been described above, the travelling and swivel action of the hydraulic excavator and the operation and posture of the working means 5 are recognized by the vehicle control unit 41. Among these various data acquired by the vehicle control unit 41, those needed in the automatic change-over mode are inputted in the monitoring controller 30. As mentioned above, this embodiment is configured such that in the automatic change-over mode, the display on the monitor 20 changes as needed during travelling by the lower travelling unit 1. The data on the traveling direction and traveling speed of the lower travelling unit 1 are, therefore, inputted to the monitoring controller 30. In addition, the swivel action angle and swivel action speed of the upper swiveling unit 3 are also inputted to the monitoring controller 30. Described specifically, these data are inputted to the display image pattern converting unit 36, and during traveling of the lower travelling unit 1, the display pattern on the monitor 20 automatically changes in relation to the swivel angle of the upper swiveling unit 3. It is also configured that in the automatic change-over mode, the display pattern on the monitor 20 is also changed according to the position, moving direction and speed of a moving obstacle.

The display on the monitor 20 is also configured to automatically change over upon detection of a moving obstacle. For this purpose, the moving obstacle detection unit 33 is connected, in parallel with the image transformation unit 32, to the output side of the image correction unit 31, whereby any movement can be detected from the camera images before their transformation to the virtual viewpoint images by the image transformation unit 32. When a moving obstacle, for example, a worker or a vehicle exists at a position near the hydraulic excavator and moreover is moving, the display on the monitor 20 is controlled to automatically change over according to the movement of the moving obstacle.

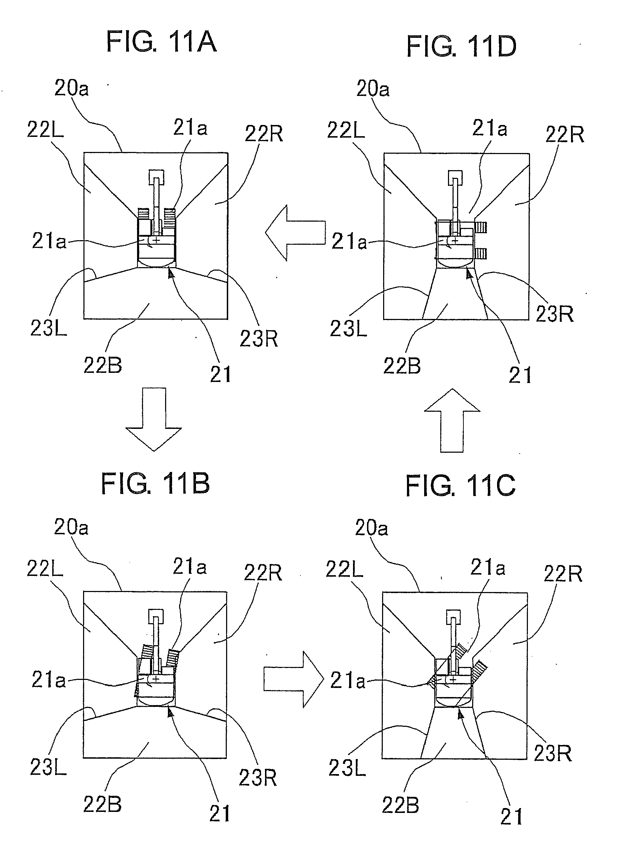

Described specifically, now assume that the switch 24a has been pressed on to select the automatic change-over mode, and in this state, the travel control lever has been manipulated and traveling of the lower travelling unit 1 has been detected. When the traveling direction is forward as seen from the operator's cab 4, a forward field of vision is visually available to the operator so that the operator is not needed to keep a particularly close watch on the monitor 20. Upon watching the monitor 20 to check any area or areas in the surroundings, it is only necessary for the operator to select the manual change-over mode and to display the necessary area or areas in an expanded manner. With respect to the rear of the vehicle, however, no field of vision is available to the operator so that an auxiliary field of vision on the monitor 20 is needed. At this time, the display pattern B that the rear virtual viewpoint image 22B is shown in expanded area is displayed on the monitor 20 as shown in FIG. 11A.

Incidentally, the upper swiveling unit 3 is swiveled relative to the lower travelling unit 1, and its swivel angle is up to substantially 360 degrees. Even during be swiveled, the upper swiveling unit 3 with the operator's cab 4 disposed thereon is fixedly displayed on the monitor 20, and the lower travelling unit 1 is displayed such that it turns on the screen. When the swing control lever is manipulated, its signal is inputted as vehicle information in the monitoring controller 30, and at the display image pattern converting unit 36, the image of the lower travelling unit portion 21b in the working machine icon 21 turns according to the swivel angle. To display, in the expanded format, the necessary area or areas in the virtual viewpoint image 22 displayed on the monitor 20, the display image pattern converting unit 36, therefore, performs processing to shift the boundary lines 23R, 23L and also changes the state of the working machine icon 21.

Now assume, for example, that the upper swiveling unit 3 has been swiveled in the direction of the arrow from the state of FIG. 11A. As shown in FIG. 11B, the display of the display pattern B is maintained when the swivel angle is 45 degrees or smaller. When the swivel angle becomes over 45 degrees, however, the screen changes, as shown in FIG. 11C, to the display pattern C that the right virtual viewpoint image 22R and left virtual viewpoint image 22L are shown expanded. Even when the swivel angle increases over 90 degrees, the display pattern C is maintained as shown in FIG. 11D. In FIGS. 11A, 11B, 11C and 11D, the traveling directions are indicated by arrows, the arrow F indicates a forward movement direction, and the arrow B indicates a backward movement direction.

When the upper swiveling unit 3 is swiveled in the direction shown in FIG. 11B from the position of the swivel angle of 0 degrees in FIG. 11A, the display pattern does not change over at the position of the swivel angle of 45 degrees but the display pattern B is maintained up to the swivel angle of 50 degrees. When the hydraulic excavator has been stopped in a state halfway through the swiveling and the automatic change-over mode has been selected, the display pattern changes to the display pattern B or the display pattern C if traveling is initiated without any change to the swivel angle, but the display pattern B is selected at a swivel angle smaller than 45 degrees, for example, at a swivel angle of 40 degrees or smaller, and the display pattern B is changed over to the display pattern C when the swivel angle has exceeded 40 degrees. In other words, from 40 degrees to 50 degrees, the display pattern is set to differ depending on the situation. Further, the display pattern C is displayed in a swivel angle range of 90 degrees in FIG. 11D to 140 degrees, and the display pattern B is displayed at swivel angles of 130 degrees to 180 degrees and 180 degrees to 230 degrees. Furthermore, the display pattern C is displayed at swivel angles of 220 degrees to 270 degrees and 270 degrees to 320 degrees, and the display pattern B is displayed at swivel angles of 310 degrees to 360 degrees, that is, 0 degree.

As has been described above, the display pattern is changed over upon traveling by the lower travelling unit 1 while the automatic change-over mode is selected. In short, the virtual viewpoint image of the rear as viewed from the operator's cab 3 on the upper swiveling unit 3 is shown expanded. Further, it is not only during traveling but also upon detection of a moving obstacle that the display pattern on the monitor 20 changes over in the automatic change-over mode.

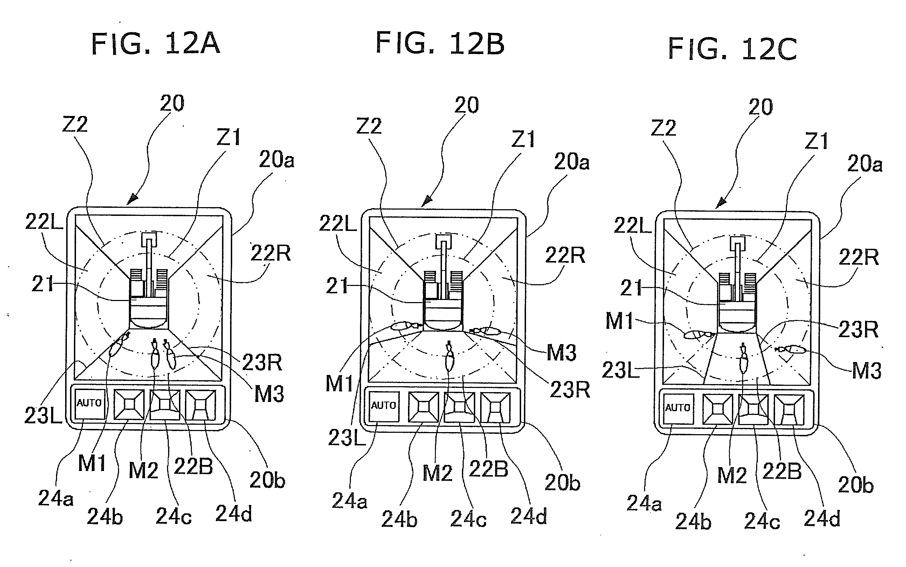

Described specifically, now assume that as shown in FIG. 12A, three worker icons M1, M2, M3 have appeared on the rear virtual viewpoint image 22B in the state that the standard image display pattern A is displayed on the monitor 20. If these three workers remain still at positions extending to neither of the boundary lines 23R, 23L, the display of the display pattern A is continued. If at least one of the three worker icons M1-M3 is located on either the boundary line 23R or the boundary line 23L, the display pattern A changes over to another display pattern that the at least one worker icon is located apart from the boundary line 23R or 23L. Next assume that the worker icons M1 and M3 have moved in directions away from the worker icon M2 and the worker icons M1 and M3 have moved close to the boundary lines 23L and 23R, respectively. In this case, to keep the position the worker icons M1, M2, M3 in a display range, the display pattern A changes over, as shown in FIG. 1B, to the display pattern B that the rear virtual viewpoint image 22B is expanded.

If the worker icons M1 and M3 continue to move in the same manner as described above, the display pattern changes over from the display pattern B to the display pattern C, and the worker icon M1 is displayed on the left virtual viewpoint image 22L, the worker icon M3 is displayed on the right virtual viewpoint image 22R, and the worker icon M2 is displayed on the rear virtual viewpoint image 22B. Now assume that the worker icon M3 remains stopped at the position of FIG. 12B while the worker icon M1 has continued the movement further from the position of FIG. 12B. As shown in FIG. 12C, the display pattern then changes over to an image with the left virtual viewpoint image 22 being shown expanded and with the right virtual viewpoint image 23 being kept reduced.

By changing over the display of the image on the monitor 20 in commensurate with the movement of a moving obstacle as described above, it is possible to resolve such a problem that, when a moving concerned target image has reached the position of the boundary line 23R or 23L, the concerned target image may change into an image separated between the relevant two virtual viewpoint images, may be displayed with a part thereof being missing, or may be displayed in part on one of the virtual viewpoint images but may not be displayed at all on the other virtual viewpoint image. The moving obstacle is, therefore, displayed surely on the monitor 20.

Meanwhile, there is a situation that, when the automatic change-over mode has been selected, traveling by the lower travelling unit 1 is performed and a moving obstacle is also moving. Now assume that in this situation, the automatic change-over mode has been selected by pressing on the switch 24a. According to the processing procedure shown in FIG. 10, a determination is first made as to whether or not the travel control lever has been manipulated. If the travel control lever is determined to have been manipulated, the travel-time change-over processing of display pattern according to the swivel angle, said processing having been described above based on FIGS. 11A to 11D, is performed (step 11).

If the travel control lever is not manipulated, a determination is made, as described in step 12, as to whether or not a moving obstacle has been detected. Now assume that this moving obstacle is displayed on the monitor 20, and moreover, is located on the boundary line 23R or 23L or has moved to the position of the boundary line 23R or 23L. The dynamic changing processing of the boundary lines 23R, 23L according to the position and moving direction of the moving obstacle, the processing having been described above based on FIGS. 12A to 12C, is performed (step 13). If the moving obstacle is not determined to have been detected, on the other hand, the display of the standard image display pattern A is performed as described in step 14.

When as mentioned above, a determination is made based on camera images captured by the cameras 13B, 13R, 13L as to whether an object is a moving obstacle or a fixed object, the determination as to whether or not the object is an obstacle can rely upon shape recognition and movement detection of the object. It is also possible to make each potential moving obstacle such as a relevant worker or vehicle carry a transmitter device. When the hydraulic excavator is travelling and a moving obstacle is detected, the travel-time change-over processing is performed in priority order. Described specifically, it is important for the operator to grasp the circumstances at the position rearward of the operator's cab 4. It is limited to a non-travel time, including a swiveling time of the upper swiveling unit 3, that the dynamic changing processing of the boundary lines 23R, 23L according to the position and moving direction of the moving obstacle is performed.

### Legend

- 1: Lower travelling unit
- 3: Upper swiveling unit
- 4: Operator's cab
- 5: Working means
- 6: equipment housing
- 7: Counterweight
- 10: Boom
- 11: Arm
- 12: Bucket
- 13B: Rear view camera
- 13L: Left view camera
- 13R: Right view camera
- 13F: Front view camera
- 20, 120, 220, 320: Monitor
- 20a, 120a, 220a, 320a: Image display part
- 20b, 220b, 320b: Control panel unit
- 21: Icon
- 22B: Rear bird's eye view image
- 22L, 22R: Side bird's eye view image
- 22F: Front camera image
- 23B, 23L, 23R: Camera image
- 30: Image processing system
- 31: Image correction unit
- 32: Image transformation unit
- 33: Obstacle detection unit
- 34: Image composing unit
- 35: Icon generation unit
- 36: Display image converting unit
- 40: Vehicle controller

## Claims

1. An around view monitor system for a working machine having a lower traveling unit and an upper swiveling unit being adapted to make swiveling movement thereon wherein a working mechanism is attached to at a proximal position of an operator's seat provided on the upper swiveling unit which comprises:
a plurality of cameras provided on the upper swiveling unit to be placed adjacent cameras partially overlapped area of view fields with each other;
an image transformation device to transform view points of respective camera images to virtual view points of upper viewpoint images;
an image composing device to display the respective virtual viewpoint images captured by the respective cameras on a monitor to be addressed on respective display areas of a monitor; and
a display image pattern converting device to change the position of boundary between the adjacent display areas of the respective virtual viewpoint images.

2. An around view monitor system according to claim 1, wherein the cameras are arranged at a position on a rear part of the upper swiveling unit and positions on both left and right side parts of the upper swiveling unit, respectively, and the display is shown as an icon of a plane view image of the working machine or of a graphical plane view image of the working machine, further the respective virtual viewpoint images of the camera images captured by the respective cameras are composed to respective addressed display areas of the monitor

3. An around view monitor system according to claim 2, wherein the boundary position of the display areas shown on the monitor between the rear virtual viewpoint image from the rear positioned camera of the upper swiveling unit and, the display image pattern convertor is adapted to change the area of one or both of the left virtual viewpoint image and right virtual viewpoint image expanded to reveal partially overlapped areas from a standard display pattern.

4. An around view monitor system according to claim 3, wherein the display image pattern convertor device is operated to change from the standard pattern image to expand the rear image display area or to expand the side image display area with manual operation by way of a display change-over device.

5. An around view monitor system according to claim 4, wherein the display change-over device is arranged on the monitor, and the monitor has an image display area and plural switches constituting as the display change-over device.

6. An around view monitor system according to claim 4, wherein the display change-over device is constructed to switch between a manual change-over mode and an automatic change-over mode, and in the automatic change-over mode, the display is brought to change-over of the display according to a situation of the working machine.

7. An around view monitor system according to claim 6, wherein in the automatic change-over mode, the display of the boundary position is changed to the expanded rear image display upon backward movement of the working machine.

8. An around view monitor system according to claim 6, wherein a moving obstacle is detected at the boundary area on the monitor during displayed in the automatic change-over mode, and the boundary positions between the display areas are changed according to a position of the moving obstacle by the display image pattern converting device.
